# EUROPEAN PATENT SPECIFICATION

(11) **EP 2 404 111 B1**
(45) Date of publication and mention of the grant of the patent: **01.05.2019**
(21) Application number: 10748380.2
(22) Date of filing: 08.02.2010
(51) Int. Cl.: F23C 10/04, F23C 10/18, F23L 7/00, F23C 6/04, F23C 9/00, F23C 10/10

(54) **METHOD FOR REDUCING NITROGEN OXIDE EMISSIONS IN OXYFUEL COMBUSTION**
VERFAHREN ZUR REDUKTION VON STICKOXIDEMISSIONEN IN DER OXYFUEL-VERBRENNUNG
PROCEDE PERMETTANT DE REDUIRE LES EMISSIONS D'OXYDE D'AZOTE DANS UNE COMBUSTION OXYGAZ

(30) Priority: 06.03.2009 FI 20095220
(43) Date of publication of application: 11.01.2012
(73) Proprietor: Valmet Technologies Oy, 02150 Espoo (FI)
(72) Inventor: VARONEN, Mikko, FI-33610 Tampere (FI)
(74) Representative: Papula Oy
(86) International application number: PCT/FI2010/050075
(87) International publication number: WO 2010/100324

(56) References cited:
- EP-A2- 0 571 234
- CN-A- 1 959 208
- DE-A1- 19 703 197
- JP-A- S5 860 107
- US-A- 4 084 545
- US-A- 4 704 084
- US-A- 5 325 796
- US-A- 5 660 125
- US-A1- 2007 175 411

## Description

The invention relates to a method for reducing nitrogen oxide emissions in oxyfuel combustion, in which method at least one primary gas flow and at least one secondary gas flow are supplied in a furnace of a circulating fluidised bed boiler, which primary gas and secondary gas have been produced by mixing oxygen and circulated flue gas together.

Concern about climate change has brought on seeking new means to reduce carbon dioxide emissions causing global warming in energy production. One of the means suggested for diminishing greenhouse emissions is oxyfuel combustion. When fuel is combusted by means of air, flue gas contains a considerable amount of nitrogen that originates from the air. Recovery of carbon dioxide from such flue gas is expensive and technically difficult. When air used in combustion is replaced by a mixture of oxygen and circulated flue gas, flue gas produced as the result of combustion mainly contains carbon dioxide, oxygen, water vapour, and some impurities. Oxyfuel combustion enables relatively simple recovery of carbon dioxide. After water carried along with fuel and developed in combustion reactions has been removed from flue gas by condensing, remaining carbon dioxide can be liquefied by cooling and compressing. Oxyfuel combustion can be utilised in both pulverised fuel combustion and fluidised bed combustion.

In circulating fluidised bed combustion, combustion takes place in solids suspension that is fluidised and circulated by means of a gas flow blown from below. The fluidised bed consists of particle-like fluidised material (e.g. sand), fuel, combustion gas, and flue gas and ash produced in combustion. In this context, combustion gas refers to primary and secondary gases, which usually comprise air or some other oxygenous gas mixture. The primary gas flow is supplied at the bottom of the furnace and the secondary gas flow is guided to the furnace via nozzles on its walls above the grate plane. In the circulating fluidised bed boiler, fluidised material is carried along with flue gas away from the fluidising space and, for providing a steady state, it is returned to the furnace via separating and circulating devices.

Circulating fluidised bed boiler utilises low combustion temperature (e.g. 700-900°C) compared to pulverised fuel combustion, which together with staged air supply enables low nitrogen oxide emissions. Nitrogen oxides (NO_{X}) refer to nitric oxide (NO) and nitrogen dioxide (NO₂), which are mostly produced from nitrogen contained by fuel in fluidised bed combustion. Staging of air supply provides reducing conditions in the lower section of the bed, whereby less nitrogen oxides are produced. The rest of air required for perfect combustion is supplied as secondary and possibly tertiary air. Circulating fluidised bed technology also enables desulphurisation of flue gases already in the boiler by supplying limestone or dolomite directly to the furnace.

Specifications US 4704084 and US 4962711 disclose examples of circulating fluidised bed boilers according to prior art which aim at reducing NO_{X} emissions by staged supply of combustion air. In both specifications, in the lower section of the furnace is formed a reducing zone by adjusting the supply of primary, secondary and possible tertiary air to the furnace. Specification CN 1959208 discloses a method for reducing NOx emissions having the features recited in the preamble of claim 1.

In oxyfuel combustion, combustion air is replaced by a mixture of oxygen and circulated flue gas. If the process is run with a standard oxygen concentration, as it is usual in air combustion, diminishing the quantity of primary gas to provide a reducing zone decreases the internal and external circulation of fluidised material, whereby heat transfer onto the furnace walls and into a possible external heat exchanger also weakens. Furthermore, the temperature of the fluidised bed may rise too high, which causes sintering of solid particles.

The object of the invention is to avoid the above problems and enhance the reduction of nitrogen oxides in an oxyfuel combusted circulating fluidised bed boiler.

The method according to the invention is characterised by what is presented in the characterising part of claim 1.

In the method according to the invention, the oxygen content of primary gas is adjusted such that at the bottom of the furnace is formed a reducing zone in which nitrogen oxides carried to the furnace along with circulated flue gas reduce to nitrogen when reacting with carbon monoxide and coke. Simultaneously, the oxygen content of secondary gas is adjusted such that above the reducing zone is formed an oxidising zone in which combustion can be completed.

Fluidisation speed can be kept constant or it can be adjusted independently, when the oxygen contents of primary and secondary gases are separately adjustable in a wide range. When decreasing the oxygen content of the primary gas, the proportion of oxygen in the secondary gas can be equivalently increased in order to provide desired total oxygen content. When the oxygen content and volume flow of both gas flows are separately adjusted, it is easier than before to maintain a suitable temperature level in both the reducing and oxidising zones.

In the method according to the invention, the secondary gas is delivered onto several different height levels, and different oxygen contents are used on different levels in order for unburnt gases carried from the reducing zone not to cause a large temperature peak at the height of the secondary gas injection. Thus, it is possible to prevent forming of a hot oxygenous section at the height of secondary gas injections, which could easily lead to production of nitrogen oxides.

The invention provides an easy method based on running mode for the reduction of nitrogen oxides in a circulating fluidised bed boiler. By varying the oxygen contents of the primary and secondary gas, it is also possible to adjust the temperatures in the furnace, which is important for sulphur reduction, among others.

Effective reduction of nitrogen oxides decreases the risk of NO_{X} reacting with water and oxygen, thus producing corroding nitric acid during the pressurisation of flue gas, which could cause problems in the carbon dioxide cleansing and pressurising facility.

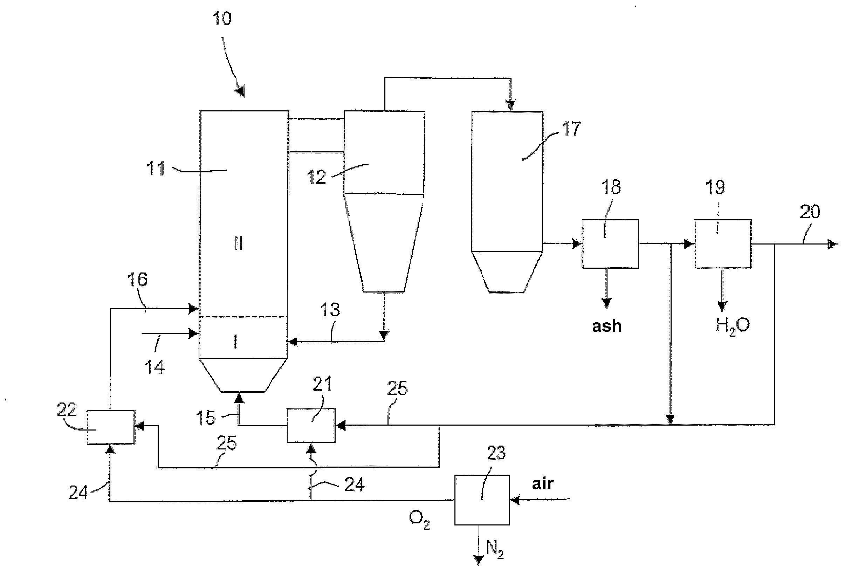

The invention will now be described with reference to the figure of the accompanying drawing, to which the invention is by no means intended to be narrowly restricted.

The figure schematically shows circulating fluidised bed combustion with a mixture of oxygen and circulated flue gas.

A circulating fluidised bed boiler 10 shown in the figure comprises a furnace 11 in which fuel is combusted in a circulating fluidised bed, a cyclone separator 12 in which fluidised material is separated from flue gas, and a return channel 13 via which fluidised material is circulated back to the furnace 11. Fuel 14 is supplied to the furnace 11 to which is also supplied oxygenous fluidisation and combustion gas as a primary gas flow 15 and as at least two secondary gas flows 16. Combustion takes place in the fluidised bed, which is put to fluidise and circulate by means of the primary gas flow 15 supplied from below. The fuel 14 can be e.g. solid fuel, such as coal.

The fluidised bed consists of solid inert bed material (usually sand), fuel supplied in it, fuel ash, possible limestone, combustion gas, and flue gas produced in combustion. The gas flows 15, 16 are arranged so great that a part of fluidised material exits along with flue gas from the upper section of the furnace to the cyclone separator 12. The cyclone separator 12 separates solid particles from flue gas, which are returned to the furnace 11 via the return channel 13 and an external heat exchanger (not shown in the figure) possibly connected to it.

After separating solid matter, the flue gas is guided from the cyclone separator 12 to heat recovery 17 and from there further to fly ash separation 18, which can be implemented e.g. with electrostatic or bag filters. After the fly ash separation 18, the flue gas is guided to a condenser 19, in which water and gases are separated from it by condensing. After the condenser 19, the flue gas 20 of oxyfuel combustion mainly contains carbon dioxide, which can be cleansed and pressurised with methods known as such.

The primary gas flow 15 is supplied at the bottom of the furnace 11 via a wind box (not shown in the figure) or equivalent. Two or more secondary gas flows 16 are supplied above the bottom via injection nozzles (not shown in the figure) on the walls of the furnace 11. Both gas flows 15, 16 contain oxygen and circulated flue gas, the main components of which are carbon dioxide and possibly water vapour. Furthermore, flue gas contains small amounts of, inter alia, nitrogen oxides, sulphur dioxide, oxygen, and carbon monoxide. In order to provide good fluidisation and circulation of the solids suspension, the proportion of the primary gas flow 15 is usually at least 60% of the total amount of the combustion gases 15, 16 supplied to the furnace 11.

The primary gas flow 15 is produced by means of first mixing means 21 by mixing oxygen 24 and circulated flue gas 25 together in a desired ratio. Equivalently, the two or more secondary gas flows 16 are produced by means of second mixing means 22 by mixing oxygen 24 and circulated flue gas 25 together in a desired ratio. The oxygen 24 can be produced e.g. by removing nitrogen from air by means of an oxygen plant 23 or by some other equivalent means. The circulated flue gas 25 can be taken from the furnace flue either before the condenser 19 or after the condenser 19 depending on the wish of using wet or dry flue gas.

The first mixing means 21 for producing the primary gas flow 15 and the second mixing means 22 for producing the two or more secondary gas flows can be in connection with the injection nozzles supplying gas to the furnace 11 or they can be separate from the furnace 11, whereby the gas nozzles are supplied with a ready-mixed gas mixture. The mixing means 21, 22 can consist of means known as such (valves, measuring sensors, adjusters etc.) for adjusting the oxygen content of the gas flow supplied to the furnace.

The oxygen content of the primary gas flow 15 is adjusted such that a reducing zone I is formed at the bottom of the furnace 11, in which zone there is oxygen less than required for the perfect combustion of fuel. The speed of the primary gas flow is again adjusted such that a suitable level of internal and external circulation of fluidised material can be provided.

In the reducing zone I, substochiometric conditions prevail in which more carbon monoxide and unburnt coal, i.e. coke, are produced than in the normal stochiometric combustion. From the effect of coke and carbon monoxide, nitrogen oxides NO_{X}, both those carried along with the primary gas and those produced from the fuel, are reduced to nitrogen gas N₂ in this zone.

The oxygen content of the two or more secondary gas flows 16 is adjusted such that above the reducing zone I is formed an oxidising zone II in which there is oxygen more than required for the perfect combustion of fuel. In the oxidising zone II, the combustion of fuel is completed.

There are secondary gas nozzles located on several different heights and they are supplied with secondary gas having different oxygen content. Each secondary gas flow 16 is provided with its own mixing means 22 for adjusting the oxygen content of the secondary gas flows.

Due to the circulation of flue gas and the reducing zone, flue gas exiting from the circulating fluidised bed boiler to the carbon dioxide recovery only contains a very small amount of nitrogen oxides.

Many different variations of the invention are possible within the scope defined by claims presented next.

## Claims

1. A method for reducing nitrogen oxide emissions in oxyfuel combustion, the method comprising supplying in a furnace (11) of a circulating fluidized bed boiler (10) at least one primary gas flow (15) and at least one secondary gas flow (16), which primary gas (15) and secondary gas (16) have been produced by mixing oxygen and circulated flue gas together, **characterized by**
adjusting the oxygen content of the primary gas (15) such that at the bottom of the furnace (11) is formed a reducing zone (I), and adjusting the oxygen content of the secondary gas (16) such that the above reducing zone (I) is formed an oxidizing zone (II), wherein the oxygen contents of the primary gas (15) and the secondary gas (16) are adjusted by changing the ratio of oxygen to circulated flue gas in said gas flows (15, 16),
supplying in the furnace (11) two or more secondary gas flows at least two different heights, and
adjusting the oxygen contents of the secondary gas flows supplied at different heights different from each other.

2. A method according to claim 1, **characterized by** mixing oxygen (24) and circulated flue gas (25) together with mixing means in connection with the furnace (11) just before supplying the primary gas (15) or the secondary gas (16) to the furnace (11).

3. A method according to any of preceding claims, **characterized by** adjusting the temperature of the furnace by varying the oxygen content of the primary gas (15) and/or the secondary gas (16).

## Patentansprüche

1. Verfahren zum Reduzieren von Stickstoffoxidemissionen bei der Oxyfuel-Verbrennung, wobei das Verfahren Einspeisen in einem Ofen (11) eines zirkulierenden Wirbelschichtkessels (10) von mindestens einem Primärgasstrom (15) und mindestens einem Sekundärgasstrom (16) umfasst, deren Primärgas (15) und Sekundärgas (16) durch Zusammenmischen von Sauerstoff und zirkuliertem Rauchgas erzeugt worden sind, **gekennzeichnet durch**
derartiges Einstellen des Sauerstoffgehalts des Primärgases (15), dass am Boden des Ofens (11) eine reduzierende Zone (I) ausgebildet wird, und derartiges Einstellen des Sauerstoffgehalts des Sekundärgases (16), dass die obige reduzierende Zone (I) als eine oxidierende Zone (II) ausgebildet wird, wobei die Sauerstoffgehalte des Primärgases (15) und des Sekundärgases (16) durch Ändern des Verhältnisses von Sauerstoff zu zirkuliertem Rauchgas in diesen Gasströmen (15, 16) eingestellt werden,
Einspeisen in dem Ofen (11) von zwei oder mehr Sekundärgasströmen in mindestens zwei unterschiedlichen Höhen und
Einstellen der Sauerstoffgehalte der in unterschiedlichen Höhen eingespeisten Sekundärgasströme unterschiedlich voneinander.

2. Verfahren nach Anspruch 1, **gekennzeichnet durch** Zusammenmischen von Sauerstoff (24) und zirkuliertem Rauchgas (25) mit Mischmitteln in Verbindung mit dem Ofen (11) unmittelbar vor dem Einspeisen des Primärgases (15) oder des Sekundärgases (16) in den Ofen (11).

3. Verfahren nach einem der vorstehenden Ansprüche, **gekennzeichnet durch** Einstellen der Temperatur des Ofens durch Variieren des Sauerstoffgehalts des Primärgases (15) und/oder des Sekundärgases (16).

## Revendications

1. Procédé permettant de réduire des émissions d'oxyde d'azote dans une combustion oxygaz, le procédé comprenant la fourniture dans un four (11) d'une chaudière à lit fluidisé circulant (10) d'au moins un flux de gaz primaire (15) et d'au moins un flux de gaz secondaire (16), ledit gaz primaire (15) et ledit gaz secondaire (16) ayant été produits en mélangeant conjointement de l'oxygène et un gaz de combustion que l'on fait circuler,
**caractérisé par**
un ajustement de la teneur en oxygène du gaz primaire (15) de sorte qu'au fond du four (11) est formée une zone réductrice (I) et un ajustement de la teneur en oxygène du gaz secondaire (16) de sorte que la zone réductrice ci-dessus (I) est formée d'une zone oxydante (II), dans lequel les teneurs en oxygène du gaz primaire (15) et du gaz secondaire (16) sont ajustées en faisant changer le rapport d'oxygène au gaz de combustion que l'on fait circuler dans lesdits flux de gaz (15, 16),
une fourniture dans le four (11) de deux ou plusieurs flux de gaz secondaires d'au moins deux hauteurs différentes, et
un ajustement des teneurs en oxygène des flux de gaz secondaires fournis à différentes hauteurs différentes les unes des autres.

2. Procédé selon la revendication 1, **caractérisé par** un mélange d'oxygène (24) et de gaz de combustion que l'on fait circuler (25) conjointement avec des moyens de mélange en relation avec le four (11) juste avant une fourniture du gaz primaire (15) ou du gaz secondaire (16) au four (11).

3. Procédé selon l'une quelconque des revendications précédentes, **caractérisé par** un ajustement de la température du four en faisant varier la teneur en oxygène du gaz primaire (15) et/ou du gaz secondaire (16).
